# EUROPEAN PATENT APPLICATION

(11) **EP 3 527 474 A1**
(43) Date of publication of application: **21.08.2019**
(21) Application number: 17859953.6
(22) Date of filing: 15.09.2017
(51) Int. Cl.: B62M 3/16, B62J 6/06

(54) **LIGHT EMITTING PEDAL FOR BICYCLE**

(30) Priority: 14.10.2016 KR 20160005949 U
(71) Applicant: Hyeon, Cheol Min, Incheon 21625 (KR)
(72) Inventor: Hyeon, Cheol Min, Incheon 21625 (KR)
(74) Representative: Zimmermann, Tankred Klaus
(86) International application number: PCT/KR2017/010140
(87) International publication number: WO 2018/070677

(57) **Abstract**

The present invention relates to a light emitting pedal for a bicycle, wherein the light emitting pedal has been developed so that, when riding a bicycle, the rotating motion of a pedal body relative to a pedal shaft coupled to a crank arm is used to light up LEDs installed on the front and rear surfaces of the pedal body, thereby allowing easy discrimination from the surroundings. In the light emitting pedal for the bicycle, an electricity generating unit is provided in a pedal, which includes the pedal shaft mounted to a bicycle crank arm and the pedal body rotatably coupled to the pedal shaft, and causes an illumination part mounted on the pedal body to emit light. The electricity generating unit is characterized by comprising: a multi-pole magnet in which a plurality of magnets, which have a shape that is radially fragmented from a cylindrical shape and have inner and outer circumferences having different polarities, are bonded by an adhesive to a central portion that is inserted into the pedal body of the pedal shaft, and are mounted and fixed in a cylindrical shape in which different polarities are repeated along an outer circumferential surface; a pair of space portions formed symmetrically on both sides around the center through which the pedal shaft of the pedal body passes; a pair of mounting protrusions protruding into the space portions; a rotation shaft, of which both ends are rotatably mounted to the mounting protrusions; a rotation magnet mounted to the rotation shaft; a coil mounted along an inner edge of the space portions; and an LED light emitting unit connected to the coil and mounted to the front surface or the rear surface of the pedal body.

## Description

### [Technical Field]

The present invention relates to a light emitting pedal for a bicycle, and more particularly, to a light emitting pedal for a bicycle, in which the rotation of the pedal body relative to a pedal shaft coupled to a crank arm is used when riding a bicycle to cause LEDs mounted on front and rear surfaces of the pedal body to emit light, thereby allowing easy identification of the bicycle from surroundings.

### [Background Art]

In the past, a bicycle was a means of play for children and a means of transportation for adults including adolescents, but recently, bicycle users for exercise and leisure have rapidly increased and the number of bicycle users exceeds 12 million.

Accordingly, bicycle accidents have rapidly increased, and thus various devices are required to prevent the accidents. In the past, a rear side of the bicycle was equipped with a reflector for reflecting light to enable a vehicle approaching behind the bicycle to easily identify the bicycle mainly at night, and there has been efforts such as use of a taillight for directly emitting light.

A pedal of the bicycle has also been equipped with a reflector on front and rear surfaces of a pedal body to identify the bicycle from front and rear sides. However, the degree of reflection varies significantly depending on the direction of light, and the effectiveness is insufficient when the pedal is contaminated by soil, chain lubricating oil or the like during use.

Korean Utility Model Registration No. 20-0315573-0000 (May 26, 2003) discloses the configuration that the pedal shaft serves as a shaft having a rotating permanent magnet, and a coil is disposed on a pedal body, such that electricity is generated in the coil by the rotation of the pedal shaft to turn on a light emitting element.

However, because the structure becomes complicated when an element including the coil is disposed at a joint portion between the pedal shaft and the pedal body, there is a risk of a serious accident if breakage occurs during riding, so the durability of the pedal, which is required to be rigid, is seriously affected.

In addition, generated inductive power is proportional to the number of turns of a copper coil and the moving speed of a magnet, but a sufficient space to wind the coil cannot be ensured.
(Patent Document 1) Korean Utility Model Registration No. 20-0315573-0000 (May 26, 2003)
(Patent Document 2) Korean Patent Registration No. 10-1076613-0000 (October 19, 2011)
(Patent Document 3) Korean Patent Registration No. 10-1625279-0000 (May 23, 2016)

### [Disclosure]

### [Technical Problem]

The present invention is developed to solve the above-mentioned problems, and an object of the present invention is to develop a light emitting pedal for a bicycle, in which an LED of the pedal is emitted by using the pedal shaft that rotates relative to the pedal body and a coupling structure between the pedal shaft and the pedal body is maintained firmly.

### [Technical Solution]

To achieve the above-mentioned object, according to the present invention, the light emitting pedal for the bicycle includes an electricity generating unit provided in a pedal including a pedal shaft mounted on a crank arm of the bicycle and a pedal body rotatably coupled to the pedal shaft so as to enable an illumination part mounted on the pedal body to emit light, wherein the electricity generating unit increases: a multi-pole magnet in which a plurality of magnets having a radially fragmented cylindrical shape and having inner and outer circumferences having different polarities are bonded by an adhesive, and mounted and fixed to a central portion of the pedal shaft inserted into the pedal body, to have a cylindrical shape having different polarities repeated along an outer circumferential surface; a pair of space portions formed symmetrically on both sides around a center of the pedal body through which the pedal shaft passes; a pair of mounting protrusions protruding from the space portions; a rotation shaft having both ends rotatably mounted to the mounting protrusions; a rotation magnet mounted to the rotation shaft; a coil mounted along an inner edge of the space portion; and an LED light emitting unit connected to the coil and mounted to a front surface or a rear surface of the pedal body.

In addition, the multi-pole magnet is integrally arranged such that a plurality of polarities are formed along an outer surface of the multi-pole magnet by multi-pole magnetization.

In addition, the pedal body is formed of a transparent material, each of the pair of space portions is provided therein with a pair of guide protrusions that are spaced apart from an inner side surface adjacent to a front surface or a rear surface of both surfaces of the pedal body and protrude in a direction to face each other, and the LED light emitting unit is formed of a thin plate-shaped surface mount device (SMD) LED and inserted into a space formed by the both guide protrusions 28.

### [Advantageous Effects]

As described above, the present invention has a structure that magnetic force of the mounted multi-pole magnet rotates the rotation magnets mounted on both sides of the pedal body by using the relative rotation of the pedal shaft, and electricity is generated in the coil by the rotation of the rotation magnet to cause the LED to emit light, so that the safety at night can be ensured by the emitted light, aesthetic feeling can be given, and the rigidity can be maintained at the joint portion, between the pedal shaft and the pedal body, to which much force is applied, thereby ensuring the durability.

### [Description of Drawings]

FIG. 1 is a perspective view according to an embodiment of the present invention.
FIG. 2 is a perspective view showing a pedal according to an embodiment of the present invention.
FIG. 3 is a perspective view showing a pedal shaft according to an embodiment of the present invention.
FIG. 4 is an exploded perspective view showing a pedal body according to an embodiment of the present invention.
FIG. 5 is a conceptual view showing an operational principle according to an embodiment of the present invention.
FIG. 6 is an exploded perspective view showing a pedal body according to another embodiment of the present invention.

### [Best Mode]

### [Mode for Invention]

Hereinafter, the configuration of the present invention will be described in detail with reference to the accompanying drawings so that a person skilled in the art can easily understand and reproduce the same.

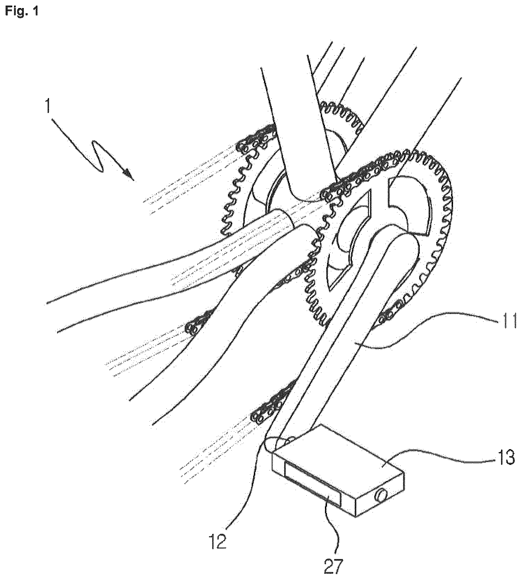

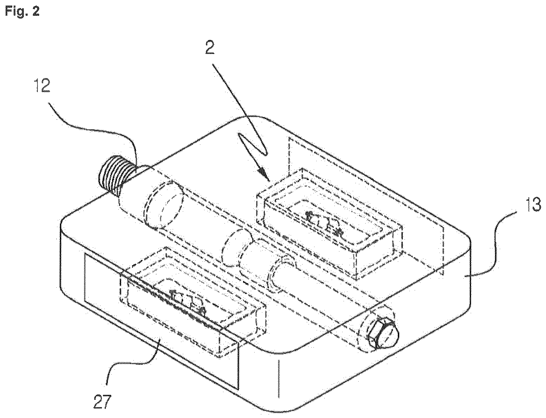

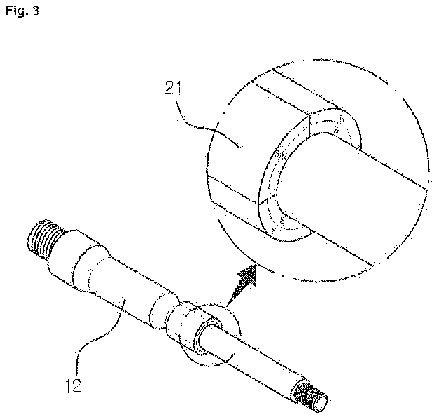

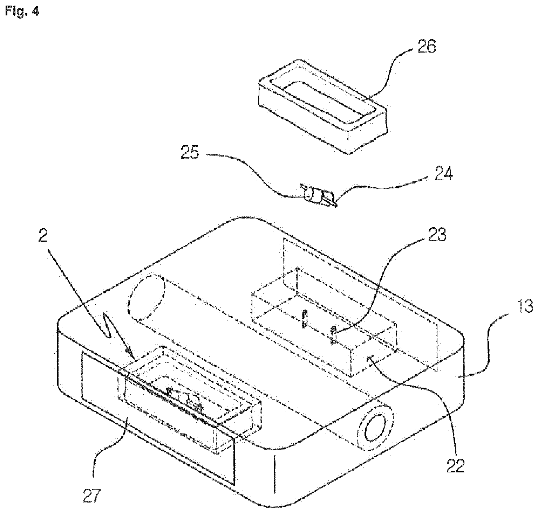

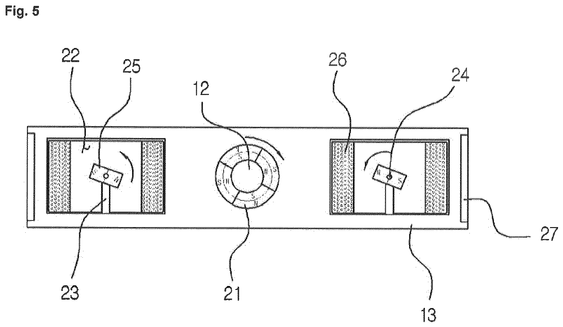

FIG. 1 is a perspective view according to an embodiment of the present invention. FIG. 2 is a perspective view showing a pedal according to an embodiment of the present invention. FIG. 3 is a perspective view showing a pedal shaft according to an embodiment of the present invention. FIG. 4 is an exploded perspective view showing a pedal body according to an embodiment of the present invention. FIG. 5 is a conceptual view showing an operational principle according to an embodiment of the present invention. A basic principle of the light emitting pedal for a bicycle, as described above, has been disclosed in the related art, commercialized and sold, in which the light emitting pedal has an electricity generating unit 2 provided in the pedal including a pedal shaft 12 mounted on a crank arm 11 of the bicycle 1 and a pedal body 13 rotatably coupled to the pedal shaft 12, thereby enabling an illumination part mounted on the pedal body 13 to emit light.

However, the most important factor in bicycle 1 is safety.

Although the configuration to emit light by the electricity generating unit 2 itself is clearly helpful for the safety, the structure of the pedal having in sufficient rigidity may cause a damage to a user.

According to the present invention, the pedal shaft 12 is mounted therein with a multi-pole magnet 21, in which a plurality of magnets having a radially fragmented cylindrical shape and having inner and outer circumferences having different polarities are bonded by an adhesive, mounted and fixed to a central portion inserted into the pedal body 13, to have a cylindrical shape having different polarities repeated along an outer circumferential surface. Thus, the impact on durability is minimized by the configuration in which only the multi-pole magnet 21 is arranged in the existing pedal body 13.

The above multi-pole magnet 21 is configured not to generate induced electromotive force in the coil 26 but to rotate the rotation magnet 25. The light emitting pedal according to the present invention includes: a pair of space portions 22 formed symmetrically on both sides around a center of the pedal body 13 through which the pedal shaft 12 passes; a pair of mounting protrusions 23 protruding from the space portions 22; a rotation shaft 24 having both ends rotatably mounted to the mounting protrusions 23; a rotation magnet 25 mounted to the rotation shaft 24; a coil 26 mounted along an inner edge of the space portion 22; and an LED light emitting unit 27 connected to the coil 26 and mounted to a front surface or a rear surface of the pedal body 13.

In other words, the relative rotation of the multi-pole magnet 21 causes the rotation magnets 25 on both sides thereof to rotate, at this time, electricity is generated in the coil 26 to cause the LED light emitting unit 27 to emit light.

Although the above configuration depends on a size of the space portion 22, a sufficient space for mounting the coil 26 may be formed, the LED light emitting unit 27 may emit light more brightly based on the nature that the electric power is generated more when the number of turns of the coil 26 increases.

In addition, the durability of the pedal body 13 is secured sufficiently by the portion through which the pedal shaft 12 passes and the edge portion, so the durability of the pedal body 13 is not degraded even when the space portions 22 are formed on both sides of the pedal body 13.

In addition, according to another embodiment of the present invention, the multi-pole magnet 21 is integrally arranged such that a plurality of polarities are formed along an outer surface of the multi-pole magnet 21 by multi-pole magnetization.

When the multi-pole magnet 21 has only two polarities, the rotation magnet 25 rotates once upon one rotation of the pedal shaft 12, so the slow rotation speed of the pedal cannot produce enough electricity. Thus, as shown in the drawing, when the multi-pole magnet is configured to vary four polarities along an outer surface thereof, the number of rotation of the rotation magnet is twice as much as that of the pedal shaft 12, so that the electricity may be produced more. Accordingly, the multi-pole magnet 21 may be configured to have more polarities.

In addition, a multi-pole magnetization is mainly used for a ferrite magnet as a method of enabling powder sintered and molded to be magnetized while an electric current flows in various directions, and the above method is a known technique.

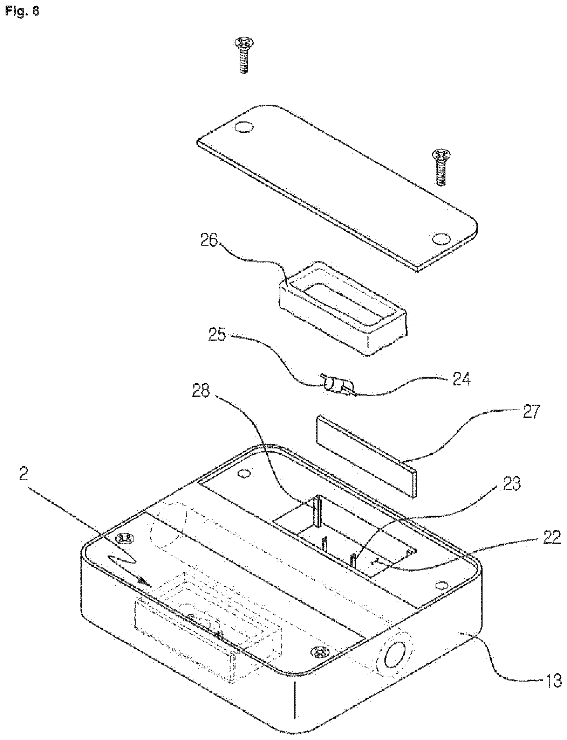

FIG. 6 is an exploded perspective view showing the pedal body according to another embodiment of the present invention. According to the embodiment, the pedal body 13 is formed of a transparent material, each of the pair of space portions 22 is provided therein with a pair of guide protrusions 28 that are spaced apart from an inner side surface adjacent to a front surface or a rear surface of both surfaces of the pedal body and protrude in a direction to face each other, and the LED light emitting unit 27 is formed of a thin plate-shaped surface mount device (SMD) LED and inserted into a space formed by the both guide protrusions 28.

According to the present invention, the light is not simply irradiated in the forward and backward directions. When the LED light emitting unit 27 is mounted therein and the pedal body 13 is formed of a transparent material, the light from the LED light emitting unit 27 is scattered while passing through the pedal body 13 in addition to being directed forward or backward, so that the effect that the entire pedal looks like emitting the light can be obtained.

According to the above configuration, in addition to identifying the bicycle from front and rear sides, the presence of bicycle is identified from all sides including both the front and rear sides at night, so that accidents can be prevented and the new aesthetic feeling can be expected.

**[Description of Reference Numerals]**

| | |
|---|---|
| 1: bicycle | 11: crank arm |
| 12: pedal shaft | 13: pedal body |
| 2: electricity generating unit | |
| 21: multi-pole magnet | 22: space portion |
| 23: mounting protrusion | 24: rotation shaft |
| 25: rotation magnet | 26: coil |
| 27: LED light emitting unit | 28: guide protrusion |

## Claims

1. A light emitting pedal for a bicycle, the light emitting pedal comprises an electricity generating unit (2) provided in a pedal including a pedal shaft (12) mounted on a crank arm (11) of the bicycle (1) and a pedal body (13) rotatably coupled to the pedal shaft (12) so as to enable an illumination part mounted on the pedal body (13) to emit light, wherein
the electricity generating unit (2) comprises:
a multi-pole magnet (21) in which a plurality of magnets having a radially fragmented cylindrical shape and having inner and outer circumferences having different polarities are bonded by an adhesive, and mounted and fixed to a central portion of the pedal shaft (12) inserted into the pedal body (13), to have a cylindrical shape having different polarities repeated along an outer circumferential surface;
a pair of space portions (22) formed symmetrically on both sides around a center of the pedal body (13) through which the pedal shaft (12) passes;
a pair of mounting protrusions (23) protruding from the space portions (22);
a rotation shaft (24) having both ends rotatably mounted to the mounting protrusions (23);
a rotation magnet (25) mounted to the rotation shaft (24) ;
a coil (26) mounted along an inner edge of the space portion (22); and
an LED light emitting unit (27) connected to the coil (26) and mounted to a front surface or a rear surface of the pedal body (13).

2. The light emitting pedal of claim 1, wherein the multi-pole magnet (21) is integrally arranged such that a plurality of polarities are formed along an outer surface of the multi-pole magnet (21) by multi-pole magnetization.

3. The light emitting pedal of claim 1 or 2, wherein
the pedal body (13) is formed of a transparent material,
each of the pair of space portions (22) is provided therein with a pair of guide protrusions (28) that are spaced apart from an inner side surface adjacent to a front surface or a rear surface of both surfaces of the pedal body and protrude in a direction to face each other, and
the LED light emitting unit (27) is formed of a thin plate-shaped surface mount device (SMD) LED and inserted into a space formed by the both guide protrusions (28).
